# FASCICULE DE BREVET EUROPEEN

(11) **EP 0 633 221 B1**
(45) Date de publication et mention de la délivrance du brevet: **11.09.1996**
(21) Numéro de dépôt: 94401361.4
(22) Date de dépôt: 17.06.1994
(51) Int. Cl.: C01B 21/096, C23G 1/02

(54) **Composition aqueuse d'acide sulfamique épaissie**
Eingedickte wässrige Zusammensetzung aus Amidoschwefelsäure
Thickened aqueous composition of sulfamic acid

(30) Priorité: 09.07.1993 FR 9308503
(43) Date de publication de la demande: 11.01.1995
(73) Titulaire: RHONE-POULENC CHIMIE, 92408 Courbevoie Cédex (FR)
(72) Inventeur: Guillou, Véronique, F-92150 Suresnes (FR)
(74) Mandataire: Fabre, Madeleine-France

(56) Documents cités:
- EP-A- 0 241 779
- EP-A- 0 351 303
- PATENT ABSTRACTS OF JAPAN vol. 004, no. 140 (C-026) 3 Octobre 1980 & JP-A-55 089 497 (HITACHI LTD) 7 Juillet 1980

## Description

La présente invention a pour objet une composition à base d'acide sulfamique incorporant à titre d'agent épaississant un hétéropolysaccharide de type succinoglycane.

Il est de pratique courante d'utiliser des compositions acides pour traiter des surfaces recouvertes de dépôt minéraux et/ou organiques. Ces dépôts minéraux sont généralement constitués de composés tels que carbonates, sulfates, oxydes de métaux comme le calcium, magnésium, potassium et fer. L'acide, mis en oeuvre dans ces compositions, est généralement sélectionné en fonction de la nature chimique du dépôt à ôter. Parmi les acides les plus utilisés, on peut en particulier mentionner l'acide phosphorique, plus spécifique au décapage de la rouille, les acides chlorhydrique et formique, appropriés au détartrage des surfaces de porcelaine, et l'acide sulfamique. Parmi les acides précités, l'acide sulfamique se révèle particulièrement performant. Toutefois, sa forte acidité, avantageuse sur le plan efficacité, pose un problème pour la mise au point de formulations correspondantes.

En effet, classiquement, les compositions de décapage incorporent un agent viscosifiant destiné à les rendre moins fluides. Il s'en suit un temps de contact prolongé entre l'acide et la surface à nettoyer et par conséquent bénéfique à l'activité de l'acide vis à vis de la paroi sur laquelle il est appliqué. La gomme xanthane s'avère un des agents viscosifiants les plus employés et de nombreuses compositions de nettoyages correspondantes ont déjà été décrites dans la littérature (EP 233 110).

Or, l'acide sulfamique, compte-tenu de son faible pK, de l'ordre de 1, s'avère contrairement aux autres acides précités, incompatible avec la gomme xanthane. On assiste rapidement à une dégradation de celle-ci au contact de l'acide sulfamique. Actuellement, des formulations épaissies à base d'acide sulfamique et dont la viscosité est stable au cours du temps ne sont donc pas disponibles.

La présente invention a précisément pour objet de proposer une formulation épaissie à base d'acide sulfamique.

Plus précisément, la présente invention concerne une composition aqueuse à base d'acide sulfamique caractérisée en ce qu'elle contient à titre d'épaississant un hétéropolysaccharide de type succinoglycane, ledit épaississant y étant stabilisé par une quantité efficace en sulfamate de potassium.

De manière inattendue, la demanderesse a mis en évidence que la sélection à titre d'agent épaississant d'un heteropolysaccharide de type succinoglycane et l'adjonction de sulfamate de potassium à la solution aqueuse d'acide sulfamique épaissie correspondante permet de conserver à la composition sa texture épaissie de manière prolongée dans le temps.

Par hétéropolysaccharide de type succinoglycane, on entend désigner selon l'invention, un hétéropolysaccharide comportant des motifs dérivés du glucose, du galactose, et de sels d'acides pyruvique, succinique et acétique.

L'hétéropolysaccharide de type succinoglycane mis en oeuvre selon l'invention est de préférence obtenu par fermentation d'un hydrate de carbone sous l'action d'un microrganisme approprié. A titre de microorganismes susceptibles d'être employés on peut notamment citer les bactéries appartenant au genre Agrobacterium et plus particulièrement les espèces Agrobacterium radiobacter, Agrobacterium rhizogenes, Agrobacterium tumefaciens.

Plus particulièrement, il s'agit du succinoglycane obtenu par fermentation d'un hydrate de carbone à l'aide d'une culture Agrobacterium tumefaciens I 736, un de ses mutants ou de ses recombinants.

Cet hétéropolysaccharide est décrit de manière détaillée dans le brevet EP 351 303.

Le sulfamate de potassium peut être introduit tel quel dans la composition aqueuse acide épaissie ou encore généré in situ. Cette seconde éventualité suppose que la quantité en acide sulfamique de départ ait été majorée dans cette perspective. Le sulfamate de potassium est généré in situ par simple ajout de la quantité adéquate en hydroxyde de potassium.

Les proportions relatives de la composition selon l'invention en acide sulfamique, hétéropolysaccharide de type succinoglycane et sulfamate de potassium peuvent varier dans une large mesure selon la viscosité souhaitée et l'application spécifique visée.

Leur pH est généralement compris entre 0,5 et 1,5. Quant à la quantité en hétéropolysaccharide de type succinoglycane, elle est comprise entre 0,01 et 0,8% en poids par rapport au poids total de la composition.

A titre indicatif, une composition aqueuse de pH compris entre 0,5 et 1,5 et de viscosité de l'ordre de 200 à 6000 mPa.s comprend en poids environ 5 à 10% en acide sulfamique, 0,1 à 0,6% en poids d'hétéropolysaccharide de type succinoglycane, et entre 0,1 et 6% en poids en sulfamate de potassium.

Dans des compositions de nettoyage, l'acide est généralement inclu en quantité comprise entre 0,5 mole et 10 moles par litre de composition de manière à obtenir une action de nettoyage efficace. La quantité de sel est fonction de la valeur du pK et de la quantité de l'acide libre présent dans la composition. La quantité nécessaire sera déterminée de manière à maintenir le pH de la solution à une valeur comprise entre environ 0,5 et 1,5. Le pH optimal dépendra de la nature du dépôt à retirer et de la nature de la surface à nettoyer.

La quantité de polysaccharide à inclure dans la composition peut également varier largement en fonction de la consistance désirée de la composition qui peut aller d'un liquide à un gel. Il est important pour le nettoyage des surfaces que la viscosité et/ou le seuil d'écoulement soient tels que la composition puisse être appliquée à l'épaisseur désirée et maintenue sur les surfaces inclinées sans que l'écoulement ne se produise. Des compositions utiles pour le détartrage d'articles sanitaires sont généralement conditionnées en flacon "gicleur". Dans ce type de conditionnement, les quantités en hétéropolysaccharide seront plus faibles et ajustées pour permettre un écoulement facile par la buse tout en ayant une viscosité suffisante pour rester en contact avec la surface à nettoyer. En revanche, des compositions sous forme de gel épais ou pâteux plus spécialement adaptées à un décapage par étalement au moyen d'un couteau, d'un pinceau ou d'une brosse ou sous forme de gel solide diluable à l'eau, pourront contenir l'hétéropolysaccharide en proportion plus importante. Dans tous les cas, les quantités en sulfamate de potassium seront ajustées pour conduire à une formulation épaissie stable au cours du temps. L'homme de l'art est à même, de part ses connaissances techniques, de procéder à ces ajustements.

Les compositions peuvent être préparées de toute manière souhaitable par mélange des additifs dans l'eau. Il est préférable de disperser et dissoudre initialement le polysaccharide dans l'eau puis d'ajouter l'acide et enfin le sel.

L'addition du sulfamate de potassium ou sa formation in situ a pour effet d'augmenter la valeur du seuil d'écoulement de la composition. De plus, elle permet de minimiser l'hydrolyse du polysaccharide qui se traduit par une chute de la viscosité et du seuil d'écoulement. Les compositions peuvent donc être stockées tout en conservant à long terme des propriétés rhéologiques satisfaisantes. Elles sont particulièrement utiles pour le nettoyage de surfaces recouvertes de dépôts organiques et/ou minéraux.

Les compositions peuvent éventuellement contenir divers autres ingrédients utilisés dans les formulations acides tels que des agents tensioactifs, des colorants, des détergents, des parfums, des bactéricides, des abrasifs et autres.

Les exemples présentés ci-après à titre non limitatif de la présente invention, permettront de mettre en évidence d'autres avantages et caractéristiques de celle-ci.

Le succinoglycane mis en oeuvre dans les exemples est issu de la fermentation d'un substrat hydrocarboné par la souche Agrobactérium tumefaciens I 736 identifiée de manière détaillée dans le brevet EP 351 303.

En ce qui concerne le mode opératoire employé pour la préparation de ce succinoglycane on se rapportera également à ce brevet.

### EXEMPLE 1

Des compositions aqueuses à base de 8% en poids en acide sulfamique sont épaissies à l'aide de 0,3% en poids du succinoglycane identifiée ci-dessus.

Dans le cas de la formulation selon l'invention, on génère in situ le sel potassium de l'acide sulfamique par incorporation d'hydroxyde de potassium. Pour ce faire, l'hydroxyde de potassium est introduit en quantité suffisante pour neutraliser 1,3% de l'acide sulfamique initialement présent ce qui revient à générer 13,4 mmoles de sulfamate de potassium pour 100g de formulation aqueuse.

En ce qui concerne les formulations témoins c'est à dire ne contenant pas de sulfamate de potassium, l'une d'entre elle n'incorpore aucun sel et les trois autres contiennent un sel minéral choisi parmi le KCl, Na₂SO₄ et K₂SO₄. De la même façon, chacun de ces sels est introduit à une concentration de 13,4 mmoles pour 100g de formulation. Ce qui revient à ajouter à chacune des formulations correspondantes 1% en poids de KCl, 1,9% en poids de Na₂SO₄, et 2,3% K₂SO₄.

Dans tous les cas, les formulations sont ajustées à 100g avec de l'eau. Leur pH est de l'ordre de 0,7.

La stabilité dans le temps et en températures de chacune de ces formulations a été appréciée en appréciant leur viscosité respective à température ambiante 25°C et 45°C, pendant 5 mois.

Les mesures de viscosité sont effectuées à l'aide d'un viscosimètre BROOKFIELD avec un mobile N°2 et une vitesse de rotation de 10rpm.

Le tableau présenté ci-après rend compte des résultats obtenus.

On note que le témoin N°1, c"est à dire sans adjonction de sel, perd près de la moitié de sa viscosité après trois mois à température ambiante et perd la totalité de sa viscosité à 45°C.

L'ajout de sulfate de potassium ou de sodium n'améliore en rien la stabilité du système.

L'ajout de chlorure de potassium apporte une amélioration mais ses formulations corespondantes possèdent l'inconvénient de générer d'importants problèmes de corrosion.

Il apparaît clairement que c'est le sulfamate de potassium qui conduit aux meilleurs résultats. Sa présence permet d'obtenir une formulation parfaitement stable au moins trois mois à température ambiante et de doubler la durée de vie de la formule à 45°C.

**TABLEAU**

| **FORMULATION TESTEE** | **pH** | **DUREE DE STOCKAGE** (jours) | **STOCKAGE A 25°C** | **STOCKAGE A 45°C** |
|---|---|---|---|---|
| | | | **VISCOSITE** (mPa.s) | |
| Témoin sans sel | 0,66 | 0 | 1800 | 1800 |
| | | 30 | 1520 | 0 |
| | | 60 | 1200 | |
| | | 140 | 280 | |
| avec sulfamate de potassium | 0,70 | 0 | 1800 | 1800 |
| | | 30 | 1520 | 840 |
| | | 60 | 1560 | 480 |
| | | 140 | 1240 | |
| avec sulfate de sodium | 0,73 | 0 | 1800 | 1800 |
| | | 30 | 1580 | 120 |
| | | 60 | 1400 | 0 |
| | | 140 | 440 | |
| avec sulfate de potassium | 0,75 | 0 | 1800 | 1800 |
| | | 30 | 1500 | 120 |
| | | 60 | 1360 | 0 |
| | | 140 | 440 | |
| avec chlorure de potassium | 0,65 | 0 | 1800 | 1800 |
| | | 30 | 1560 | 440 |
| | | 60 | 1440 | 0 |
| | | 140 | 960 | |

## Revendications

1. Composition aqueuse d'acide sulfamique épaissie caractérisée en ce qu'elle contient à titre d'épaississant un hydrocolloïde de type succinoglycane, ledit épaississant y étant stabilisé par une quantité efficace de sulfamate de potassium.

2. Composition selon la revendication 1 caractérisée en ce que l'hétéropolysaccharide de type succinoglycane est issu de la fermentation d'un hydrate de carbone par une souche de microorganismes appartenant au genre Agrobacterium et plus particulièrement aux espèces Agrobacterium radiobacter, Agrobacterium rhizogenes, Agrobacterium tumefaciens.

3. Composition selon la revendication 1 ou 2 caractérisée en ce qu'il s'agit d'un succinoglycane obtenu par fermentation d'un hydrate de carbone à l'aide d'une culture Agrobacterium tumefaciens I 736, un de ses mutants ou de ses recombinants.

4. Composition selon l'une des revendications précédentes caractérisée en ce que son pH est compris entre 0,5 et 1,5.

5. Composition selon l'une des revendications précédentes caractérisée en ce que la quantité en hétéropolysaccharide de type succinoglycane est comprise entre 0,01 et 0,8% en poids par rapport au poids total de la composition.

6. Composition selon l'une des revendications précédentes caractérisée en ce que pour un pH compris entre 0,5 et 1,5 et une viscosité de l'ordre de 100 à 6000 mPa.s elle comprend en poids environ 5 à 10% en acide sulfamique, 0,1 à 0,6% en poids d'hétéropolysaccharide de type succinoglycane et entre 0,1 et 6% en poids en sulfamate de potassium.

7. Utilisation d'une composition selon l'une des revendications précédentes pour le traitement de surfaces recouvertes de dépôts minéraux et/ou organiques.

## Claims

1. Thickened aqueous sulphamic acid composition, characterized in that it contains a hydrocolloid of succinoglycan type as thickening agent, the said thickening agent being stabilized therein by an effective amount of potassium sulphamate.

2. Composition according to Claim 1, characterized in that the heteropolysaccharide of succinoglycan type is obtained from the fermentation of a carbohydrate by a strain of microorganisms belonging to the genus Agrobacterium and more particularly to the species Agrobacterium radiobacter, Agrobacterium rhizogenes and Agrobacterium tumefaciens.

3. Composition according to Claim 1 or 2, characterized in that it is a succinoglycan obtained by fermentation of a carbohydrate using an Agrobacterium tumefaciens I 736 culture, one of its mutants or one of its recombinants.

4. Composition according to one of the preceding claims, characterized in that its pH is between 0.5 and 1.5.

5. Composition according to one of the preceding claims, characterized in that the amount of heteropolysaccharide of succinoglycan type is between 0.01 and 0.8 % by weight relative to the total weight of the composition.

6. Composition according to one of the preceding claims, characterized in that, for a pH between 0.5 and 1.5 and a viscosity of the order of 100 to 6000 mPa.s it comprises by weight approximately 5 to 10 % of sulphamic acid, 0.1 to 0.6 % by weight of heteropolysaccharide of succinoglycan type and between 0.1 and 6 % by weight of potassium sulphamate.

7. Use of a composition according to one of the preceding claims for the treatment of surfaces covered with inorganic and/or organic deposits.

## Patentansprüche

1. Eingedickte wäßrige Zusammensetzung von Sulfaminsäure, dadurch gekennzeichnet, daß sie als Verdickungsmittel ein Hydrokolloid vom Typ Succinoglycan enthält, wobei dieses Verdickungsmittel mit einer wirksamen Menge von Kaliumsulfamat stabilisiert ist.

2. Zusammensetzung nach Anspruch 1, dadurch gekennzeichnet, daß das Heteropolysaccharid vom Typ Succinoglycan aus der Fermentation eines Kohlenhydrates mit einem Mikroorganismen-Stamm der Gattung Agrobacterium stammt, und ganz besonders mit einem der Stämme Agrobacterium radiobacter, Agrobacterium rhizogenes, Agrobacterium tumefaciens.

3. Zusammensetzung nach Anspruch 1 oder 2, dadurch gekennzeichnet, daß es sich um ein Succinoglycan handelt, das durch Fermentation eines Kohlenhydrates mit Hilfe einer Kultur von Agrobacterium tumefaciens I 736, einer seiner Mutanten oder seiner Rekombinanten erhalten wurde.

4. Zusammensetzung nach einem der vorstehenden Ansprüche, dadurch gekennzeichnet, daß ihr pH-Wert zwischen 0,5 und 1,5 liegt.

5. Zusammensetzung nach einem der vorstehenden Ansprüche, dadurch gekennzeichnet, daß die Menge an Heteropolysaccharid vom Typ Succinoglycan zwischen 0,01 und 0,8 Gew.-% liegt, bezogen auf das Gesamtgewicht der Zusammensetzung.

6. Zusammensetzung nach einem der vorstehenden Ansprüche, dadurch gekennzeichnet, daß sie für einen pH-Wert zwischen 0,5 und 1,5 und eine Viskosität in der Größenordnung von 100 bis 6000 mPa.s etwa 5 bis 10 Gew.-% Sulfaminsäure, 0,1 bis 0,6 Gew.-% Heteropolysaccharid vom Typ Succinoglycan und zwischen 0,1 und 6 Gew.-% Kaliumsulfamat umfaßt.

7. Verwendung einer Zusammensetzung nach einem der vorstehenden Ansprüche zur Behandlung von Oberflächen, die mit inorganischen oder organischen Ablagerungen überzogen sind.
